# FASCICULE DE BREVET EUROPEEN

(11) **EP 2 583 282 B1**
(45) Date de publication et mention de la délivrance du brevet: **17.09.2014**
(21) Numéro de dépôt: 11725106.6
(22) Date de dépôt: 16.06.2011
(51) Int. Cl.: G21C 3/16, G21C 7/14, G21C 21/02, G21C 21/18, G21C 7/10, G21C 3/04

(54) **JOINT D'INTERFACE SOLIDE A POROSITE OUVERTE POUR CRAYON DE COMBUSTIBLE NUCLEAIRE**
FESTE ÜBERGANGSFUGE MIT OFFENER POROSITÄT FÜR EINEN KERNBRENNSTAB
SOLID INTERFACE JOINT WITH OPEN POROSITY FOR A NUCLEAR FUEL ROD

(30) Priorité: 16.06.2010 FR 1054781
(43) Date de publication de la demande: 24.04.2013
(73) Titulaire: Commissariat à l'Énergie Atomique et aux Énergies Alternatives, 75015 Paris (FR)
(72) Inventeur: ZABIEGO, Maxime, F-04860 Pierrevert (FR); DAVID, Patrick, F-37540 Saint Cyr Sur Loire (FR); RAVENET, Alain, F-83560 Vinon Sur Verdon (FR); ROCHAIS, Denis, F-37550 Saint-avertin (FR)
(74) Mandataire: Ilgart, Jean-Christophe
(86) Numéro de dépôt international: PCT/EP2011/059999
(87) Numéro de publication internationale: WO 2011/157780

(56) Documents cités:
- FR-A1- 2 769 621
- GB-A- 933 091
- GB-A- 1 187 929
- US-A- 4 235 673
- US-A- 4 783 311

## Description

### DOMAINE TECHNIQUE

La présente invention se rapporte à l'interface entre l'empilement de pastilles et la gaine les entourant, dans un crayon de combustible nucléaire utilisés dans un réacteur nucléaire.

Les applications visées pour l'invention sont aussi bien :
- les réacteurs nucléaires à neutrons rapides (RNR) refroidis au gaz (RNR-gaz) dits de IV^{ème} génération, dont le fonctionnement est assuré avec un caloporteur sous forme de gaz tel que l'hélium pressurisé, avec des crayons de combustible nucléaire à gaine en matériau composite à matrice céramique (CMC), et des pastilles de combustible de type carbure mixte d'uranium et de plutonium [7],
- les réacteurs nucléaires à neutrons rapides fonctionnant avec un caloporteur sodium (RNR-Na) [10],
- les réacteurs nucléaires à eau pressurisée (REP) [3] ou bouillante (REB).

L'invention concerne les crayons de combustible, à géométrie cylindrique et à section circulaire.

Par « réacteurs nucléaires », dans l'ensemble de la demande, on comprend le sens usuel du terme à ce jour, à savoir des centrales de production d'énergie à partir des réactions de fission nucléaires utilisant des éléments combustibles dans lesquels se produisent les fissions qui libèrent la puissance calorifique, cette dernière étant extraite des éléments par échange thermique avec un fluide caloporteur qui assure leur refroidissement.

Par « crayon de combustible nucléaire », dans l'ensemble de la demande, on comprend le sens officiel défini par exemple, dans le dictionnaire des Sciences et Techniques nucléaires, à savoir un tube étroit de faible diamètre, fermé à ses deux extrémités, constituant du coeur d'un réacteur nucléaire et contenant de la matière fissile. Ainsi, une « aiguille de combustible nucléaire » dont l'usage privilégie l'appellation est un crayon de combustible nucléaire au sens de la présente invention.

### ART ANTÉRIEUR

Différents types d'éléments combustibles existent en fonction des conditions de fonctionnement et des performances des réacteurs nucléaires.

Les principales fonctionnalités auxquelles doit répondre un élément de combustible nucléaire sont :
- permettre une production contrôlée de chaleur, par des réactions nucléaires, ce qui implique des contraintes de performances (densité de noyaux fissiles, transparence neutronique des matériaux de structure, taux de combustion...) et de sûreté (stabilité géométrique nécessaire à la maîtrise de la réactivité nucléaire et du refroidissement),
- assurer le confinement des produits radioactifs issus des réactions nucléaires, ce qui implique le maintien de l'étanchéité de la gaine en situation de fonctionnement nominal du réacteur, et une remise en cause de celle-ci restant dans des limites de rejets prédéfinies en situation accidentelle,
- garantir une extraction contrôlée de l'énergie dégagée par les réactions nucléaires, ce qui implique des contraintes de performances (limitation des barrières thermiques susceptible de dégrader les transferts vers le caloporteur) et de sûreté (intégrité du canal caloporteur, marge vis-à-vis de la fusion du combustible, limitation des gradients thermiques sources de dilatations différentielles susceptibles de conduire à un chargement mécanique excessif des structures...).

Les éléments combustibles de base classiquement rencontrés dans les installations nucléaires peuvent être classés en fonction de leur géométrie comme suit:
- sphères : particules ou boulets des combustibles des réacteurs à Haute Température (RHT), par exemple,
- cylindres : aiguilles des combustibles des réacteurs RNR ou crayons des combustibles des réacteurs REP, par exemple,
- plaques: plaques micro-structurées pour les combustibles des réacteurs expérimentaux ou macro-structurées pour les combustibles des réacteurs RNR-G, par exemple.

L'invention concerne exclusivement les crayons ou aiguilles de combustible nucléaire à géométrie cylindrique et à section circulaire dans lesquels des pastilles de combustibles cylindriques à section transversale circulaire sont empilées dans une gaine tubulaire étanche présentant à l'une de ses extrémités une zone dépourvue de pastilles, que l'on appelle vase d'expansion, qui sert à stocker les gaz produits par les réactions nucléaires et relâchés par les pastilles combustibles en cours d'irradiation. Dans cette configuration cylindrique, il y a une interface entre la colonne de pastilles empilées et la gaine. Cette interface peut jusqu'à présent être réduite au montage uniquement à une surface de contact ou correspondre à un jeu fonctionnel qui peut alors consister en un ou plusieurs matériaux sous forme gazeuse, liquide, de couches comme expliqué par la suite.

Les inventeurs ont fait l'inventaire des fonctions que doit remplir cette interface dans un élément combustible. Elles sont indiquées ci-dessous.

### Fonctions primaires :

f1/ gérer le découplage mécanique entre les pastilles de combustible et la gaine, de façon à limiter l'interaction mécanique entre les pastilles et la gaine (désignée par la suite par IMPG), en permettant une expansion libre de la colonne de pastilles empilées, selon une direction radiale et selon une direction axiale;
f2/ permettre le transport des produits de fission gazeux, relâchés par l'élément combustible, jusqu'au vase d'expansion situé en extrémité axiale de l'élément combustible;
f3/ gérer le couplage thermique entre le combustible et la gaine :
   i. en garantissant la minimisation des barrières thermiques, notamment dans la direction radiale, afin d'éviter tout échauffement excessif du combustible;
   ii. en garantissant la continuité de cette fonction, notamment dans les directions axiale et azimutale, afin de minimiser les hétérogénéités thermiques, sources de dilatations différentielles susceptibles d'induire notamment des chargements mécaniques importants au niveau de la gaine.

### Fonctions induites par l'environnement :

f4/ assurer les fonctions primaires (f1 à f3) en minimisant l'impact neutronique de l'interface, de manière à préserver les performances du coeur du réacteur:
   i. en minimisant l'encombrement géométrique ;
   ii. en ayant recours à des matériaux présentant une faible section efficace d'interaction avec les neutrons (en particulier dans le spectre rapide).
f5/ assurer les fonctions primaires (f1 à f3) en garantissant la compatibilité chimique de l'interface avec son environnement:
   i. en garantissant la compatibilité chimique de l'interface avec la gaine (pas d'accroissement d'une cinétique à haute température, en situation accidentelle, par exemple) ;
   ii. en garantissant la compatibilité chimique de l'interface avec le combustible (absence d'eutectique à « basse température » susceptible de réduire la marge à la fusion du combustible, par exemple).

### Fonctions secondaires :

f6/ limiter le transfert de constituants du combustible (produits de fission relâchés, notamment) vers la gaine, afin de prévenir le risque de corrosion interne, potentiellement fragilisant, qui est susceptible d'en résulter: il s'agit d'une fonction liée à la fonction primaire f1 ;
f7/ optimiser le centrage combustible/gaine de manière à minimiser les hétérogénéités thermiques génératrices de points chauds et de chargements mécaniques accrus au niveau de la gaine: il s'agit d'une fonction secondaire liée aux fonctions primaires f1 et f3 ;
f8/ minimiser (sans l'introduire lui-même) le risque de délocalisation d'éclats de combustible dans le jeu éventuel entre combustible et gaine, susceptible de conduire à un défaut d'intégrité de la gaine par ovalisation et/ou poinçonnement de celle-ci lors de la réduction de ce jeu sous l'effet des déformations différentielles (dilatation thermique et gonflement): il s'agit d'une fonction liée à la fonction primaire f1.

### Fonctions annexes :

f9/ satisfaire les contraintes économiques usuelles :
   i. durée de vie : remplir les fonctions primaires et secondaires sur une durée d'exploitation du combustible compatible avec les performances économiques visées ;
   ii. capacité d'approvisionnement des matériaux et de mise en oeuvre des procédés de fabrication ;
   iii. coût.
f10/ exclure toute pénalité significative vis-à-vis de la sûreté en situation accidentelle (réactivité chimique de l'interface avec les matériaux de structure du coeur en phase de dégradation avancée de celui-ci, par exemple) ;
f11/ minimiser les problèmes techniques de fabricabilité, notamment la mise en oeuvre du procédé d'assemblage de l'élément combustible (combustible, interface et gaine) ;
f12/ satisfaire, avec des contraintes minimales, les exigences en aval du cycle de réaction nucléaire que sont la séparation et le recyclage.

Dans les éléments de combustible à géométrie cylindrique et à section circulaire, l'interface entre pastilles et gaine est usuellement sous forme d'un gaz, typiquement de l'hélium, qui présente des propriétés optimales (parmi les gaz possibles) vis-à-vis de la conductivité thermique (fonction f3.i), de la transparence neutronique (fonction f4.ii), de la neutralité chimique (fonction f5) et des fonctions annexes (fonctions f9 à f12). Les fonctions de découplage mécanique entre pastilles de combustible et gaine (fonction f1) et de transport des gaz de fission vers le vase d'expansion (fonction f2) sont idéalement remplies par une interface sous forme gazeuse, dans la mesure où l'on provisionne, à la fabrication, un jeu fonctionnel suffisant entre pastilles et gaine pour éviter tout comblement sous irradiation, lié aux déformations différentielles du combustible et de la gaine [5].

Toutefois, un crayon à géométrie cylindrique à section circulaire et à interface sous forme gazeuse, présente un antagonisme car il ne peut remplir à la fois les fonctions f1 et f2, d'une part, et les fonctions f3.i et f4.i, d'autre part, que dans des limites très strictes de performances. En effet, au-delà des contraintes d'encombrement qui nuisent aux performances neutroniques (densité de matière fissile dans l'élément combustible), la conductivité thermique de l'interface gazeuse étant relativement médiocre, tout accroissement du jeu fonctionnel entre pastilles et gaine induit le renforcement de la barrière thermique qu'il constitue, conduisant à des températures accrues du combustible. Outre le fait que l'augmentation de température s'effectue au détriment des exigences de sûreté (réduction de la marge à la fusion du combustible, notamment), elle s'accompagne d'un accroissement du taux d'expansion volumique de la pastille qui favorise le rattrapage dudit jeu sous irradiation, ce qui réduit ainsi l'efficacité de l'accroissement de l'épaisseur de l'interface et par là, l'augmentation de la durée de vie de l'élément combustible.

Afin d'atténuer cette pénalité thermique, une solution a été proposée dans le brevet JP 11183674 et expérimentée dans divers programmes d'irradiations expérimentales [8], [9]. Cette solution consiste à réaliser l'interface non plus sous forme de gaz mais sous forme d'un métal à bas point de fusion, liquide aux conditions de fonctionnement de l'élément combustible: le sodium, notamment. La conductivité accrue du métal, par rapport au gaz, permet ainsi d'atténuer considérablement les problématiques liées à la conductance de l'interface, qui contribue alors de manière négligeable au bilan thermique de l'élément combustible et donne ainsi potentiellement accès à des épaisseurs d'interface plus importantes.

Un avantage supplémentaire de l'interface sous forme d'un métal liquide est d'atténuer, par sa bonne conductivité thermique, les problèmes d'hétérogénéité thermique circonférentielle découlant d'un éventuel excentrement de la pastille de combustible par rapport à la gaine. En effet, l'exigence de concentricité (fonction f7) n'est à priori pas garantie par une interface sous forme de gaz ou de métal liquide, en raison de l'absence de rigidité propre de ceux-ci. Aussi, tout excentrement implique que le flux de chaleur est hétérogène sur la circonférence. Les conséquences de cette hétérogénéité thermique (point chaud au niveau de la gaine et chargement mécanique induit par les déformations différentielles d'origine thermique) sont ainsi atténuées lorsque l'interface est sous forme métallique liquide du fait des meilleurs transferts thermiques entre le métal liquide et la gaine d'une part et les pastilles d'autre part.

Toutefois, l'interface sous forme de métal liquide n'est pas sans poser quelques problèmes.

En premier lieu, la compatibilité avec l'environnement (fonction f5, pour les aspects chimiques, par exemple) s'avère très limitante. Ainsi, dans le cas du sodium, qui s'applique naturellement en RNR-Na, il y a clairement incompatibilité avec un caloporteur eau (REP), ainsi qu'avec un réacteur fonctionnant à haute température et conduisant de fait à une marge insuffisante (voire inexistante, dans le cas du RNR-G, par exemple) vis-à-vis du risque d'ébullition du sodium (température d'ébullition de l'ordre de 880°C).

En ce qui concerne les hétérogénéités thermiques (fonction f3.ii), il est clair que toute discontinuité dans l'interface, induite par la présence de bulles de gaz dans le métal liquide (bulles formées à la fabrication ou par les gaz de fission relâchés sous irradiation), conduirait à une remise en cause des bénéfices thermiques de cette solution : ce problème a été constaté lors d'irradiations expérimentales, au cours desquelles il a été observé qu'il est susceptible de conduire à une fin de vie prématurée de l'élément de combustible par une rupture prématurée de la gaine [9]. Par ailleurs, en ce qui concerne la limitation de transferts des constituants de combustible (fonction f6), il a été observé, dans des irradiations expérimentales de combustibles en carbure dans des réacteurs de type RNR-Na, visant à comparer le comportement des interfaces en hélium et en sodium, que le métal liquide favorise la fragilisation de la gaine, via une carburation de celle-ci induite par le transfert accru du carbone provenant du combustible à travers le sodium, alors que ce problème ne semble pas se poser à travers l'hélium [9], sauf en cas de contact pastille/gaine par excentrement. Enfin, en ce qui concerne la fonction f8, l'absence de rigidité propre du joint permet la délocalisation d'éclats de combustible qui, s'ils viennent se positionner dans l'interface, sont susceptibles de conduire à une ovalisation, voire un poinçonnement, de la gaine, par compression de l'éclat entre pastilles et gaine en cours d'irradiation. Un tel poinçonnement implique une perte prématurée de la fonction de sûreté d'intégrité/étanchéité de la gaine, tandis qu'une ovalisation dégrade les performances en ce qu'elle affecte les échanges thermiques et les interactions mécaniques éventuelles entre éléments combustibles voisins. En pratique, le retour d'expérience des irradiations d'éléments combustibles indique qu'un jeu fonctionnel radial entre pastilles et gaine d'une valeur initiale inférieure à environ 4% du rayon des pastilles de combustible permet de minimiser le risque de rupture de gaine par poinçonnement, en limitant la probabilité de délocalisation d'un éclat de combustible dans l'interface [11]. Cette limite, rendue nécessaire par les exigences de sûreté, s'avère toutefois être relativement pénalisante vis-à-vis de la durée de fonctionnement de l'élément combustible, dans la mesure où elle réduit substantiellement la durée de fonctionnement sans IMPG. De fait, toute exploitation durable d'un combustible dans un réacteur nucléaire, nécessaire à ses performances économiques, implique, dans ce contexte, qu'un fonctionnement en IMPG soit inévitable pendant une période plus ou moins longue précédant la fin de vie. Dans ce cas, le contact direct entre les pastilles de combustible et la gaine pose, par ailleurs, le problème d'endommagement de la gaine par les produits de fission qui la pénètrent, sur une épaisseur de quelques micromètres, du fait de leur énergie de recul.

Diverses solutions ont été proposées pour permettre un fonctionnement en IMPG acceptable vis-à-vis des exigences de performances économique et de sûreté.

Elles visent à répondre à deux difficultés résiduelles que ni l'interface sous forme gazeuse ni celle sous forme de métal liquide ne permettent de résoudre individuellement, à savoir :
- la nécessité de réduire le chargement mécanique imposé à la gaine en situation de contact avec le combustible,
- la minimisation de la fragilisation de la gaine par les agressions thermochimiques et les pointes de fission.

Toutes les solutions proposées consistent à déposer une ou plusieurs couches intermédiaires de matériaux en tant que tout ou partie d'interface.

Le brevet GB 1187929 propose pour une aiguille combustible d'un réacteur RNR à gaine métallique, fonctionnant à une température d'au moins 700°C, la mise en oeuvre d'une couche intermédiaire, entre pastilles de combustible et gaine, à base d'uranium métallique. Il est fait mention dans ce brevet :
- d'un contact intime entre la couche intermédiaire et la gaine ;
- d'une autre partie d'interface à fonction thermique, typiquement en sodium, entre la couche intermédiaire et la gaine ;
- d'une couche supplémentaire à fonction de compatibilité chimique, typiquement de l'alumine, entre la couche intermédiaire et la gaine ;
- de sillons formant des zones de vide entre le combustible et la couche intermédiaire;
- de la possibilité que la couche intermédiaire et/ou la pastille combustible présente une porosité lui/leur conférant une densité au plus égale à 85% de sa/leur densité théorique ;
- d'alliage d'uranium, ou d'alliage d'uranium et de molybdène en tant que constituant de la couche intermédiaire.

Des solutions analogues ont été proposées pour des crayons de combustible à gaine à base de zirconium utilisées dans les réacteurs REP.

Ainsi, le brevet US4818477 propose de réaliser un revêtement à base de poisons neutroniques consommables (borure enrichi en ¹⁰B), recouvrant les pastilles combustibles sur une épaisseur de 10µm à 100µm, de manière à atténuer l'IMPG.

Le brevet US 3969186 propose de réaliser un liner métallique, déposé sur la face interne de la gaine, de manière à prévenir le risque de perforation ou de rupture de la gaine, induit par la fissuration par corrosion sous contrainte et/ou l'interaction mécanique IMPG.

Le brevet US 4783311 propose de réaliser une combinaison de revêtements sur la face interne de la gaine (épaisseur de 4µm à 50 µm) et à la surface des pastilles combustibles (épaisseur de 10µm à 200µm), le revêtement en face interne de la gaine, dans un matériau tel que le graphite, assurant notamment un rôle de « lubrifiant ».

Le brevet JP 3068895A propose de réaliser une couche intermédiaire ductile et dotée de sillons, permettant d'absorber les contraintes induites par une éventuelle IMPG, la couche étant déformable plastiquement évitant par là la propagation de fissures en face interne de gaine.

On peut citer aussi les particules de combustible à géométrie sphérique utilisées dans des réacteurs RHT, telles que décrites dans la demande de brevet international WO2009079068. Comme décrit dans cette demande, une structure multicouches est réalisée, avec une bille de combustible au centre et une gaine autour assurant à la fois les fonctions d'intégrité mécanique et d'étanchéité aux gaz de fission de la bille combustible, et entre lesquelles une couche en pyrocarbone poreux à fonction tampon est déposée afin de ménager un volume d'expansion pour les gaz de fission et la bille de combustible.

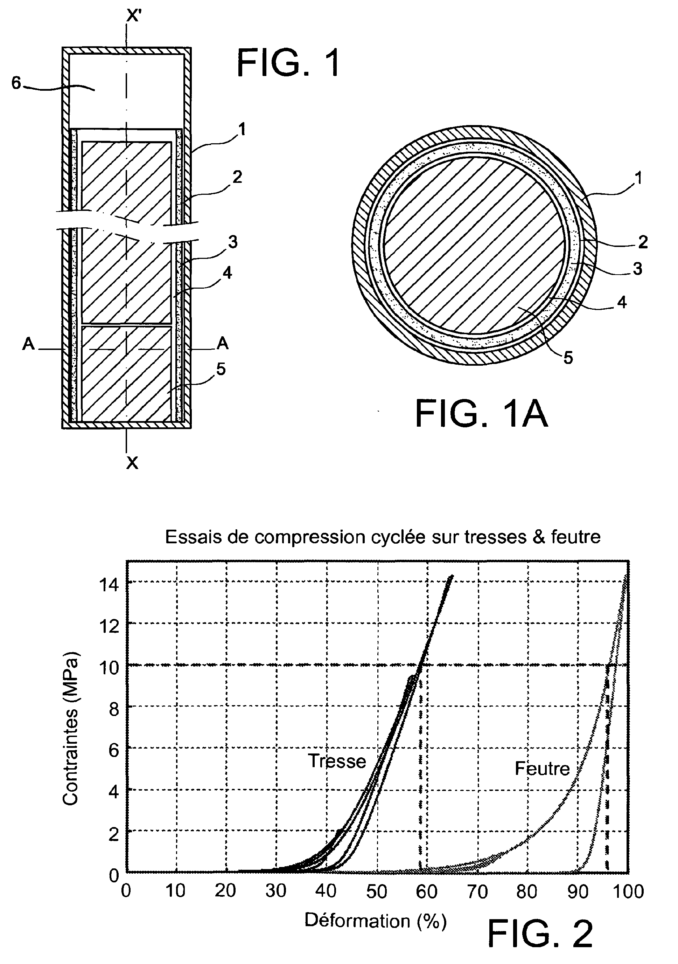

Le brevet US 4235673 divulgue l'utilisation d'une chemise, soit sous la forme d'un tissu de fils métalliques (mode de réalisation des figures 1 et 2) soit sous la forme de rubans métalliques (mode de réalisation des figures 3 et 4), enroulée de manière hélicoïdale autour de la colonne de pastilles de combustible, solidarisée à des éléments de fermeture aux extrémités de la colonne de pastilles de combustible et qui est insérée entre cette dernière et la gaine. Cette solution technologique de chemise selon ce brevet US 4235673 vise exclusivement à confiner des fragments ou éclats de pastilles susceptibles d'être créés. Ainsi, la chemise selon ce brevet US 4235673 a uniquement une fonction de confinement d'éclats de pastilles de combustible et la fonction de transfert thermique entre pastilles et gaine est nécessairement assurée par un fluide de remplissage, tel que le sodium comme explicité par exemple en colonne 4, lignes 23-30 dans ce document et la fonction d'accommodation du gonflement volumique des pastilles est assurée par la présence impérative d'un jeu fonctionnel entre chemise et gaine dimensionné à cet effet, comme cela ressort d'ailleurs explicitement du libellé de la revendication 1 de ce document. Autrement dit, le brevet US 4235673 divulgue une solution d'interface nécessairement mixte entre chemise solidarisée aux extrémités de la colonne de pastilles et liquide de transfert thermique d'épaisseur suffisante entre gaine et colonne de pastilles pour définir un jeu fonctionnel suffisant d'accommodation du gonflement volumique des pastilles. En outre, la solution d'interface mixte selon ce brevet US 4235673 est complexe à mettre en oeuvre et présente des risques de non reproductibilité, du fait de la solidarisation entre chemise et éléments de fermeture aux extrémités de la colonne de pastilles de combustible, qui nécessite donc une étape supplémentaire lors de la fabrication d'un crayon de combustible en environnement nucléarisé.

Le but général de l'invention est donc proposer une interface améliorée entre pastilles et gaine dans un crayon de combustible nucléaire à géométrie cylindrique et section circulaire qui ne présente pas les inconvénients des interfaces selon l'art antérieur tels qu'exposés ci-dessus.

Un autre but de l'invention est de proposer un procédé de fabrication d'un crayon de combustible nucléaire à interface pastilles/gaine améliorée, qui ne soit pas en rupture complète avec l'outil industriel mis en place pour fabriquer les crayons de combustible nucléaires actuels à section circulaire.

### EXPOSÉ DE L'INVENTION

Pour ce faire, l'invention a pour objet tout d'abord un crayon de combustible nucléaire s'étendant selon une direction longitudinale comprenant une pluralité de pastilles de combustible empilées les unes sur les autres et une gaine, en matériau transparent aux neutrons, entourant l'empilement de pastilles, dans lequel, en section transversale à la direction longitudinale, la gaine et les pastilles ont une section circulaire et dans lequel un joint d'interface, également de section circulaire en section transversale à la direction longitudinale, en matériau solide et transparent aux neutrons, et présentant une porosité ouverte est inséré entre la gaine et la colonne de pastilles empilées sur au moins la hauteur de cette dernière.

Selon l'invention, le joint d'interface est une structure, découplée mécaniquement à la fois de la gaine et de la colonne de pastilles, de conductivité thermique élevée et à porosité ouverte, adapté pour se déformer par compression selon son épaisseur de sorte à subir un écrasement sous l'effet du gonflement volumique des pastilles sous irradiation, l'épaisseur initiale du joint et son taux de compression étant tels que le chargement mécanique transmis à la gaine par les pastilles sous irradiation reste inférieur à une valeur seuil prédéterminée.

Par conductivité thermique élevée, on entend un coefficient de conduction thermique suffisamment élevé pour assurer le transfert thermique entre colonne de pastilles et gaine. De préférence, relativement à un gaz tel que l'hélium, on vise une augmentation de transfert thermique d'un facteur au moins égal à 10.

L'invention concerne donc un joint d'interface entre les pastilles empilées et la gaine, sous la forme d'une structure solide, de forte porosité, de préférence comprise entre 30 et 95% du volume de joint à l'état à froid et qui est adaptée pour réaliser les fonctions suivantes jusqu'aux températures de fonctionnement nominal dans les réacteurs nucléaires :
- permettre, par son écrasement, l'expansion radiale des pastilles empilées, de combustible sous irradiation, sans chargement mécanique excessif de la gaine;
- permettre, par des déformations n'impliquant pas de perte de continuité de sa structure, l'accommodation des déformations différentielles axiales entre les pastilles empilées et la gaine les entourant, et ce en température et sous irradiation et sans chargement excessif de la gaine ;
- favoriser le transfert de la chaleur produite par les réactions nucléaires au sein des pastilles, vers le caloporteur circulant le long de la gaine, et ce de manière uniforme ;
- permettre le transfert des gaz de fission et/ou de l'hélium relâchés sous irradiation, vers le vase d'expansion situé à l'extrémité de la gaine et dépourvu de matière fissile;
- assurer une protection de la gaine vis-à-vis des problématiques de compatibilité avec le combustible des pastilles, que ce soit par l'amortissement des produits de fission de recul, par la rétention des produits de fission solides et volatils relâchés par le combustible des pastilles et susceptibles de corroder la gaine, ou par le contrôle de la stoechiométrie du combustible.

Le joint d'interface selon l'invention peut être réalisé dans tout crayon de combustible nucléaire destiné à être utilisé dans des réacteurs dont le caloporteur est soit non pressurisé soit pressurisé (comme pour les réacteurs RNR-G). Dans ce dernier cas, on veille à ce que les gaines utilisées présentent une résistance suffisante à la déformation par fluage pour ne pas venir se plaquer contre les pastilles de combustible en fonctionnement. Typiquement, une gaine en CMC convient parfaitement.

Les crayons de combustible avec le joint d'interface selon l'invention peuvent être utilisés en tant que moyens de production de puissance, de chaleur et/ou de flux neutronique (avec des contraintes thermiques et neutroniques sévères) ou en tant que moyens de gestion du cycle du combustible (cibles de transmutation chargées en actinides mineurs, avec des contraintes de gonflement accrues par la production importante d'hélium sous irradiation).

Pour toutes les applications envisagées, on définit un joint d'interface solide dont la porosité ouverte autorise une expansion volumique du combustible de manière durable sans sollicitation mécanique excessive de la gaine, jusqu'à des taux de combustion pouvant atteindre localement 15 à 20 at%. On précise que at% est, selon la définition usuelle, l'unité désignant le pourcentage d'atome fissile consommé. Par « excessive », on entend une sollicitation, notamment circonférentielle, susceptible de dépasser les limites imposées par les critères usuels de dimensionnement d'un combustible nucléaire [12]. On veille par ailleurs à respecter les contraintes thermique (performances et absence de discontinuités), neutronique (transparence aux neutrons et encombrement), ainsi que de transfert des gaz de fission relâchés vers le vase d'expansion.

On peut envisager un (des) matériau (x) du joint d'interface selon l'invention qui contribue(nt) à rendre caduques les interactions non-mécaniques entre le combustible et le matériau de gaine. Ainsi, en ce qui concerne l'endommagement neutronique, le joint d'interface solide peut absorber tout ou partie des produits de fission de recul, qui seraient susceptibles de créer des dommages dans l'épaisseur de gaine (quelques micromètres, en face interne). En outre, le joint d'interface solide dont les pores ouverts peuvent :
- piéger, du fait de leur importante surface d'échange, tout ou partie des produits de fission solides et volatils, relâchés par le combustible, qui sont susceptibles de réagir chimiquement avec la gaine, et d'en dégrader ainsi les performances mécaniques (problématique de corrosion sous contrainte, par exemple) ;
- contrôler la stoechiométrie du combustible en assurant le rôle de « tampon chimique » entre le combustible et le matériau de gaine, ce qui peut-être favorable au maintien d'une marge importante vis-à-vis de la fusion locale du combustible, en évitant la formation de précipités métalliques à bas point de fusion. Cela est particulièrement le cas d'un combustible en carbure mixte d'uranium et de plutonium, envisagé actuellement pour un réacteur RNR-G. Un retour d'expérience [9] montre ainsi que la sur-stoechiométrie initiale du combustible, indispensable pour assurer ses bonnes performances, tend à baisser sous irradiation, le carbone étant « consommé » par les produits de fission et les réactions chimiques avec la gaine. Aussi, un joint d'interface à base de carbone peut être une source de carbone libre efficace susceptible de limiter la décarburation du combustible.

Les porosités ouvertes du joint et les jeux éventuels séparant le joint d'interface des pastilles combustibles et/ou de la gaine peuvent être occupés par un gaz, préférentiellement de l'hélium, et/ou par un métal liquide, tel que le sodium.

Du fait de sa consistance (rigidité intrinsèque jusqu'au seuil de chargement mécanique au-delà duquel s'amorce son écrasement), le joint d'interface solide selon l'invention garantit un centrage des pastilles combustibles dans la gaine, et empêche toute délocalisation de fragment de combustible.

Afin de retarder durablement l'IMPG, jusqu'à des taux de combustion atteignant localement jusqu'à 15 à 20 at%, on peut envisager une épaisseur de joint d'interface solide de plusieurs centaines de microns (contre typiquement une centaine de microns dans les configurations usuelles, à joint gazeux ou métal liquide). On veille de toutes façons à ce que ses propriétés thermiques, prenant en compte le cas échéant celles du gaz et/ou du métal liquide dans lequel il est plongé, qui garantissent une maîtrise de la thermique du combustible, telle que la marge à la fusion.

On veille à conférer au joint d'interface solide des propriétés mécaniques ad hoc. Ainsi, on veille à ce qu'il présente des capacités de déformation en compression, c'est-à-dire radialement à la direction du crayon de combustible, et en cisaillement (selon la circonférence et selon la direction parallèle à l'axe de révolution du crayon) suffisantes pour accommoder les déformations différentielles des pastilles de combustible et de la gaine, sous irradiation, sans induire de chargement mécanique excessif au niveau de la gaine, ni de rupture de continuité axiale et circonférentielle du joint. Ces propriétés mécaniques doivent être garanties sous irradiation, pour des doses pouvant atteindre de l'ordre de 100 dpa-Fe à 200 dpa-Fe (fluences de 2 à 4 10²⁷ n/m²). En effet, les pastilles de combustible subissent un gonflement volumique, de sorte que leur diamètre et longueur augmentent. La gaine gonflant à priori beaucoup moins que le combustible, l'interface entre pastilles et gaine se referme donc au cours de l'irradiation. Par ailleurs, la colonne de pastilles s'allonge beaucoup plus que la gaine, entraînant un cisaillement longitudinal entre eux. Ainsi, on veille à ce que le joint d'interface soit capable de :
- compenser, par sa déformation d'écrasement, la fermeture de l'interface avec une raideur compatible avec la tenue mécanique de la gaine, ce qui exclut la présence de zones localement denses (défauts résultant du procédé de fabrication, densification en irradiation...) ;
- compenser la déformation de glissement longitudinal entre colonne de combustible et gaine, par son allongement (effet du coefficient de Poisson) consécutif à son écrasement radial et/ou par une déformation de cisaillement (en supposant un accrochage surfacique sur la gaine et/ou sur le combustible avec une transmission d'effort axial compatible avec la tenue mécanique de la gaine) ; et/ou par un écoulement visqueux d'extrusion axial dans le jeu sous l'action de sa compression radiale.

Le joint d'interface selon l'invention est réalisé de manière continue sur toute sa hauteur : on cherche de toute manière un compromis de sorte qu'en compensant la déformation de glissement longitudinal ci-dessus, aucune rupture de la continuité axiale du joint n'intervienne.

De même, on veille à ce que la cohésion entre le joint d'interface du côté pastilles n'empêche pas le relâchement surfacique des gaz de fission.

Enfin, on veille à ce que les modes de déformation du joint ne conduisent pas à sa fragmentation, d'une manière susceptible de conduire à une relocalisation de fragments dans les situations de réouverture partielle de l'interface, typiquement lors d'un arrêt fortuit ou programmé du réacteur, ce qui induirait un risque de poinçonnement ultérieur de la gaine, lors d'une remontée en puissance/température, par exemple.

On veille aussi à ce que le joint d'interface solide possède des propriétés neutroniques lui conférant le plus faible impact possible sur le bilan neutronique du coeur du réacteur nucléaire. Ainsi, la forte porosité ouverte du joint selon l'invention vise à minimiser son volume résiduel, une fois totalement comprimé. On veille à ce que le (s) matériau(x) à envisager pour le joint d'interface solide soient les plus transparents possible aux neutrons, pour les crayons de combustible.

La forte porosité ouverte de la structure, telle que fabriquée, doit favoriser le transport des gaz de fission relâchés vers le vase d'expansion situé en partie haute de l'élément combustible, avec une efficacité se dégradant aussi peu que possible sous irradiation (l'écrasement de la structure conduisant à une réduction de la porosité totale et du taux de porosités ouvertes).

La surface d'échange importante offerte par la structure doit favoriser la rétention des produits de fission solides, relâchés par le combustible sous irradiation et susceptible de contribuer à la fragilisation de la gaine par corrosion sous contrainte.

Grâce au joint d'interface sous la forme d'une structure selon l'invention, on peut envisager d'augmenter son épaisseur par rapport aux épaisseurs d'interface usuellement rencontrées entre pastilles et gaine, et ce, afin de repousser la fin de vie des pastilles de combustible, avec pour conséquence un gain économique appréciable sans remise en cause de la sûreté (marge à la fusion du combustible nucléaire, par exemple).

La porosité ouverte du joint d'interface selon l'invention peut avoir un volume au moins égal à 30% du volume total du joint d'interface issu de la fabrication. De préférence, ce volume est compris entre 30% et 95% du volume total du joint d'interface issu de la fabrication et de préférence encore comprise entre 50 et 85%.

Il va de soi que la porosité et les dimensions géométriques du joint d'interface décrites sont celles du joint d'interface à froid tel qu'il est issu de la fabrication et avant son utilisation dans un réacteur nucléaire.

Il en va de même pour les autres éléments du crayon de combustible selon l'invention.

La porosité ouverte visée par l'invention peut être quantifiée par diverses techniques de mesure connues: mesure de densité pour les tresses et fibres, par exemple, ou analyse d'images par tomographie X ou par microscopie optique ou par macroscopie optique, par exemple. Avantageusement, le joint d'interface présente en section transversale à la direction (XX'), une épaisseur supérieure à au moins 4% du rayon des pastilles.

Le joint d'interface peut être constitué d'une ou plusieurs structures fibreuses, telle(s) que tresse(s) et/ou feutre(s) et/ou nappe(s) et/ou tissu(s) et/ou tricot(s). Son pourcentage volumique de fibres est alors avantageusement compris entre 15 et 50%, ce qui correspond sensiblement à une porosité comprise entre 50 et 85%, c'est-à-dire un compromis optimal entre compressibilité du joint recherchée et forte conductivité thermique accompagnée d'un confinement efficace de tout éclat de combustible susceptible d'être créé. Selon un mode de réalisation, le joint d'interface peut être constitué à partir d'une tresse comprenant une couche de fibres de carbone et d'une couche comprenant des fibres de carbure de silicium superposée sur la couche de fibres de carbone.

Alternativement, le joint d'interface peut être réalisé à partir d'un ou plusieurs matériaux alvéolaires, tel(s) qu'une mousse.

Le joint d'interface peut être à base de céramique ou à base de métal.

Pour un réacteur à neutrons rapides refroidi au gaz (RNR-gaz), on peut envisager de préférence le matériau de base de la gaine en un composite à matrice céramique (CMC) réfractaire, tel qu'en SiC-SiC_{f}, éventuellement associé à un liner à base d'alliage métallique réfractaire, et les pastilles de combustible en matériaux céramiques tels que (U, Pu) C, (U, Pu)N ou (U, Pu)O₂.

Pour un réacteur à neutrons rapides refroidi au sodium (RNR-Na), on peut envisager de préférence la gaine en matériau métallique, et les pastilles de combustible en matériaux céramiques tels que (U, Pu)C, (U, Pu)N ou (U, Pu)O₂ ou en matériaux métalliques tels que (U, Pu)Zr. Selon une variante, les porosités ouvertes du joint d'interface et les espaces entre gaine, pastilles et éléments de fermeture du crayon sont alors remplis d'un gaz, de préférence l'hélium. Selon une autre variante, la colonne de pastilles empilées est en appui contre un élément de fermeture du dessous du crayon de sorte qu'en fonctionnement dans un réacteur nucléaire, les porosités ouvertes du joint d'interface et les espaces entre gaine, pastilles et l'élément de fermeture du dessous du crayon sont remplis de sodium sur la hauteur de la colonne et que l'espace compris entre le dessus la colonne et l'élément de fermeture est rempli d'hélium.

Pour un réacteur à eau pressurisée (REP) ou bouillante (REB), on peut envisager de préférence la gaine comprenant un matériau composite à matrice céramique (CMC) réfractaire et les pastilles de combustible en matériaux céramiques tels que UO₂, (U, Pu)O₂.

L'invention concerne également un assemblage de combustible nucléaire comprenant une pluralité de crayons de combustible décrits précédemment et agencés entre eux selon un réseau.

L'invention concerne enfin un procédé de réalisation d'un crayon de combustible nucléaire comprenant les étapes suivantes :
a/ réalisation au moins partielle d'un joint de section transversale circulaire, en matériau transparent aux neutrons, sous la forme d'une structure de conductivité thermique élevée et à porosité ouverte, adapté pour se déformer par compression selon son épaisseur;
b/ insertion du joint au moins réalisé partiellement dans une gaine cylindrique à section transversale circulaire et ouverte à au moins une de ses extrémités, en matériau transparent aux neutrons ou non ;
c/ introduction d'une pluralité de pastilles de combustible nucléaire sur au plus la hauteur du joint dans ce dernier inséré dans la gaine cylindrique à section transversale circulaire ;
d/ fermeture complète de la gaine une fois le joint réalisé totalement.

Selon un premier mode, l'étape a/ est réalisée selon les sous-étapes suivantes :
- superposition d'une couche de tresse comprenant des fibres de carbure de silicium sur une couche de tresse de fibres de carbone elle-même sur un mandrin,
- compression de la tresse bicouche dans un moule cylindrique ;
- introduction d'un liant soluble dans la tresse comprimée ;
- évaporation du solvant ;
l'étape b/ est réalisée à l'aide du mandrin autour duquel la tresse est en contact, le mandrin étant ensuite retiré ;
et on réalise ultérieurement à l'étape c/ un traitement thermique sous dépression afin d'éliminer le liant et ainsi mettre en contact le joint avec la pluralité de pastilles empilées et avec la gaine. Les couches de tresse peuvent être de type bidimensionnelle avec un angle de tressage de 45° par rapport à l'axe du mandrin.

Les fibres de carbone peuvent être de type Thornel® P-100, contenant chacune 2000 filaments et craquées.

Les fibres de carbure de silicium sont de type HI- NICALON™ type S contenant chacune 500 filaments.

Le liant soluble est avantageusement un alcool polyvinylique.

Selon un deuxième mode, l'étape a/ est réalisée selon les sous-étapes suivantes :
- aiguilletage de nappes de fibres de carbone sous la forme d'un tube sur un mandrin ;
- réalisation d'un traitement thermique, par exemple à 3200°C sous Argon ;
- compression du tube traité thermiquement dans un moule cylindrique ;
- introduction d'un liant soluble dans le tube comprimé ;
- évaporation du solvant ;
l'étape b/ est réalisée à l'aide du mandrin autour duquel le tube est en contact, le mandrin étant ensuite retiré ;
et on réalise ultérieurement à l'étape c/ un traitement thermique sous dépression afin d'éliminer le liant et ainsi mettre en contact le joint avec la pluralité de pastilles empilées et avec la gaine.

Les fibres de carbone peuvent alors être de type Thornel® P-25.

Tout comme dans le premier mode, le liant soluble est avantageusement un alcool polyvinylique.

Selon un troisième mode, l'étape a/ est réalisée selon les sous-étapes suivantes :
- réalisation d'un tube en mousse de carbone composée d'alvéoles ouvertes,
- dépôt chimique en phase vapeur (CVD) d'un alliage en W-Re sur le tube en mousse de carbone.

### BRÈVE DESCRIPTION DES DESSINS

D'autres avantages et caractéristiques de l'invention ressortiront mieux à la lecture de la description détaillée d'un crayon de combustible nucléaire selon l'invention faite en référence aux figures 1 et 1A suivantes parmi lesquelles :
- la figure 1 est une vue en coupe longitudinale partielle d'un crayon de combustible nucléaire selon l'invention ;
- la figure 1A est une vue en coupe transversale du crayon de combustible nucléaire selon la figure 1.
- la figure 2 illustre sous forme de courbes des essais de compression par cycles d'un joint d'interface selon l'invention, ce mode de sollicitation étant représentatif d'un fonctionnement sous irradiation en réacteur nucléaire (non stationnaire du fait des variations de puissance).

### EXPOSÉ DÉTAILLÉ DE MODES DE RÉALISATION PARTICULIERS

On précise que l'élément représenté est un crayon de combustible nucléaire. Cet élément est représenté à froid, c'est-à-dire une fois la fabrication du crayon finie et avant toute utilisation dans un réacteur nucléaire.

Le crayon de combustible nucléaire selon l'invention comprend, de l'extérieur vers l'intérieur :
- une gaine 1 en matériau(x) métallique(s) ou CMC (matériau(x) composite(s) à matrice céramique), éventuellement revêtue d'un liner sur sa paroi interne ;
- un premier jeu 2 de montage (optionnel, dans la mesure où il peut éventuellement être éliminé à la fabrication suite au procédé d'évaporation du liant décrit précédemment) ;
- un joint 3 solide à porosité ouverte selon l'invention ;
- un deuxième jeu 4 de montage (optionnel, dans la mesure où il peut éventuellement être éliminé à la fabrication suite au procédé d'évaporation du liant décrit précédemment);
- un empilement de pastilles 5 de combustible nucléaire formant une colonne pour le crayon de combustible.

Le joint solide à porosité ouverte 3 selon l'invention présente une hauteur supérieure à celle de la colonne de pastilles empilées 5. La différence de hauteur entre le joint solide poreux 3 et la colonne de pastilles empilées est prévue pour garantir que cette dernière reste axialement en regard du joint durant toute la phase d'irradiation en fonctionnement du réacteur nucléaire au cours de laquelle elle subit un allongement par gonflement sous irradiation. Dans le cas de pastilles de combustible de type carbure mixte d'uranium et de plutonium, utilisées dans un réacteur RNR-G, par exemple, les inventeurs pensent que l'allongement de la colonne de pastilles de combustible peut s'effectuer, en moyenne sur l'aiguille la plus sollicitée, avec un taux de l'ordre de 0.5%/at%, ce qui donne un allongement atteignant de l'ordre de 10% aux taux de combustion visés. Ainsi, On prévoit dans ce cas, une hauteur de joint solide poreux 3 supérieure d'au moins 10% par rapport à celle de la colonne de pastilles empilées 5. Plusieurs types de matériaux peuvent convenir pour la fabrication du joint poreux solide 3 selon l'invention, et avantageusement les structures fibreuses, avec un éventuel dépôt de matrices dans celles-ci, ou les matériaux alvéolaires à porosité ouverte.

Les structures fibreuses pouvant convenir sont des tresses, des feutres, des nappes, des tissus ou des tricots, ou une combinaison de celles-ci, comprenant un pourcentage volumique de fibres d'au moins 15%, voire jusqu'à au moins 5% dans le cas des feutres, avant densification. Les fibres peuvent être des composés céramiques (carbone, carbures, nitrures ou oxydes) ou des composés métalliques (tels que W, alliages W-Re, Mo-Si₂...). Pour réaliser des structures fibreuses qui conviennent en tant que joint poreux 3 selon l'invention, on peut utiliser les techniques classiques de tressage, mise en forme de feutre ou nappage, aiguilletage, tissage ou tricotage [4].

Afin d'augmenter la conductivité thermique du matériau ou de protéger les fibres, on peut envisager le dépôt de composés chimiques également réfractaires (composés céramiques ou métalliques) sur les fibres. Ces dépôts représentent alors un pourcentage en volume tel que le matériau final, structure fibreuse renforcée par un dépôt, possède entre 30 % et 85 % de porosité ouverte, voire jusqu'à 95 % dans le cas des feutres. Ces dépôts sur les structures fibreuses peuvent être réalisés par les techniques classiques de dépôt chimique en phase Vapeur (CVD) [1] ou autres, telles que l'imprégnation de polymère précurseur de céramique, pyrolyse....

Le joint 3 peut être mis en place soit en le positionnant autour des pastilles 5, puis en introduisant l'ensemble joint 3/pastilles 5 dans la gaine 1, soit en l'introduisant dans la gaine 1, les pastilles étant alors introduites par la suite.

Le contact physique entre la gaine 1 et le joint 3 d'une part et entre le joint 3 et les pastilles 5 d'autre part peut être assuré, lors de la montée en température dans le réacteur nucléaire, par la dilatation thermique différentielle, celle du joint 3 étant plus importante. Une autre solution pour assurer ce contact physique est la mise en compression radiale du joint 3 puis, après mise en place de l'ensemble gaine 1-joint 3-pastilles 5, du relâchement du joint 3, avant mise en service dans le réacteur nucléaire pour lequel le crayon de combustible est destiné.

Les matériaux alvéolaires ou mousses pouvant convenir sont ceux à porosité ouverte, possédant entre 30 % et 85 % de porosité, avec des diamètres de cellules, de préférence inférieurs à 100 µm pour éviter la délocalisation de « macro-fragments » de pastilles mais suffisamment élevés pour assurer une interconnexion des pores. La composition de ces matériaux peut être basée sur des composés céramiques ou métalliques. Pour réaliser des matériaux alvéolaires qui conviennent en tant que joint poreux 3 selon l'invention, on peut utiliser des techniques classiques d'injection de bulles de gaz ou des composés générant des bulles dans le matériau fondu ou un composé précurseur (résine organique pour carbone), la métallurgie des poudres avec des composés ou particules porogènes, le dépôt d'un composé sur une mousse servant de substrat [2],[6]. La mousse de base peut ensuite être renforcée par le dépôt d'un composé de nature identique ou différente (parmi les composés céramiques ou métalliques) de celui de la mousse. Ce dépôt peut être obtenu, par exemple, par dépôt chimique en phase vapeur (CVD) [1].

Trois exemples de crayons de combustible nucléaire selon l'invention sont donnés ci-après : dans tous ces exemples, le crayon comprend un empilement de pastilles de combustible nucléaire 5 cylindriques de diamètre de 6.4 mm et une gaine 1 entourant la colonne de pastilles empilées de diamètre intérieur de 7.2 mm, soit un jeu au montage total d'épaisseur radiale de 400 µm (à froid).

A titre de comparaison, pour un combustible carbure de RNR-G, si le jeu était rempli d'un joint hélium, on dimensionnerait, pour de telles pastilles combustibles, un jeu d'épaisseur radiale de 150 µm (à froid), permettant d'atteindre un taux de combustion de l'ordre de 7.5 at% maximum.

Avec un joint solide poreux selon l'invention, en considérant la fin de vie atteinte pour une disparition complète de la porosité du joint (par écrasement sous expansion volumique des pastilles de combustible), on peut évaluer le gain sur le taux de combustion envisageable à partir de la porosité de fabrication prévue pour le joint selon l'invention. Pour un passage de 150 µm à 400 µm d'épaisseur, il faut une porosité de joint typiquement d'une valeur égale à un rapport de 150/400, soit de l'ordre de 40% (joint à 60% de la densité théorique du matériau le constituant), pour retrouver le taux de combustion du joint hélium d'épaisseur de 150 µm, et bénéficier par ailleurs des avantages identifiés précédemment (centrage pastilles/gaine, protection contre la délocalisation d'éclats de combustible dans le jeu...). On précise ici qu'on néglige l'effet thermique induit par le joint (des calculs montrent qu'il est de second ordre en ce qui concerne le taux de gonflement du combustible).

Pour atteindre un doublement du taux de combustion, avec cette porosité de 40%, il faudrait donc typiquement doubler l'épaisseur du joint, en passant à 800 µm, chiffre qui peut naturellement être réduit en augmentant la porosité de fabrication du joint: avec un joint solide poreux présentant une porosité de l'ordre de 75%, une épaisseur de 400 µm permettrait d'envisager le doublement du taux de combustion.

### Exemple 1 : Tresse avec couche en SiC /couche de C

Une première couche de tresse est réalisée avec des fibres de carbone (dénomination commerciale Thornel® P-100 contenant chacune 2000 filaments et qui sont craquées afin de réduire le diamètre du fil), sur un mandrin avec les caractéristiques suivantes :
- diamètre intérieur : 6,5 mm
- diamètre extérieur : 7,0 mm
- type de tressage : 2D
- angle de tressage : 45°

Une deuxième couche de tresse est réalisée sur la couche de tresse précédente avec des fibres de carbure de silicium (dénomination commerciale HI- NICALON™ type S contenant chacune 500 filaments), avec les caractéristiques suivantes :
- diamètre intérieur : 7,0 mm,
- diamètre extérieur : 7,4 mm
- type de tressage : 2D
- angle de tressage 45°

La tresse bicouche 3 ainsi constituée est comprimée dans un moule cylindrique de diamètre intérieur de 7,1 mm. Un liant éliminable soluble, ici un alcool polyvinylique, est ensuite introduit dans la tresse puis le solvant est évaporé.

La tresse 3 est alors démoulée puis est introduite dans une gaine métallique 1 de diamètre intérieur de 7,2 mm. Le mandrin central est alors retiré, puis une colonne de pastilles de combustible 5 de diamètre de 6,4 mm est introduite dans la tresse. Le liant est éliminé par traitement thermique de l'ensemble sous dépression. La tresse 3 se décomprime alors et entre en contact physique avec les pastilles de combustible 5 et la gaine 1.

La tresse 3 a donc une épaisseur de fabrication égale au jeu total de montage entre gaine 1 et pastilles 5, soit de 400 µm.

La gaine 1 peut alors être fermée à ses extrémités, par exemple par brasure. Même si non représenté, avant de réaliser l'étape définitive de fermeture un ressort hélicoïdal de compression est logé dans la chambre ou vase d'expansion 6 avec son extrémité inférieure en appui contre l'empilement des pastilles 5 (éventuellement une cale inerte ou une entretoise non représentée) et son autre extrémité en appui contre le bouchon supérieur. Les fonctions principales de ce ressort sont le maintien de l'empilement de pastilles 5 selon l'axe longitudinal XX' et l'absorption au cours du temps de l'allongement de la colonne combustible sous l'effet du gonflement longitudinal des pastilles 5.

Le crayon de combustible nucléaire ainsi réalisé avec un joint solide poreux selon l'invention 3 peut alors être utilisé pour son application dans un réacteur nucléaire.

### Exemple 2 : Structure aiguilletée en carbone

Des nappes de fibres de carbone (dénomination commerciale Thornel® P-25) sont aiguilletées sous forme d'un tube de diamètre intérieur de 6,5 mm et de diamètre extérieur de 7,4 mm, sur un mandrin en graphite.

L'ensemble subit alors un traitement thermique, à 3200°C sous Argon. Le tube ainsi constitué est comprimé dans un moule cylindrique de diamètre intérieur de 7,1 mm. Un liant éliminable soluble, ici un alcool polyvinylique, est ensuite introduit dans la structure puis le solvant est évaporé.

Le joint solide poreux 3 ainsi obtenu est alors démoulé puis est introduite dans une gaine 1 de diamètre intérieur de 7,2 mm. Le mandrin central est alors retiré, puis une colonne de pastilles de combustible 5 de diamètre de 6,4 mm est introduite dans la structure mixte joint 3/gaine 1.

Le liant est alors éliminé par traitement thermique de l'ensemble sous dépression. Le joint 3 se décomprime alors et entre en contact avec les pastilles de combustible 5 empilées et la gaine 1.

La gaine 1 peut alors être fermée à ses extrémités, par exemple par brasure. Même si non représenté, avant de réaliser l'étape définitive de fermeture, un ressort hélicoïdal de compression est logé dans la chambre ou vase d'expansion 6, aussi appelé plenum, avec son extrémité inférieure en appui contre l'empilement des pastilles 5 (éventuellement une cale inerte ou une entretoise non représentée) et son autre extrémité en appui contre le bouchon supérieur. Les fonctions principales de ce ressort sont le maintien de l'empilement de pastilles 5 selon l'axe longitudinal XX' et l'absorption au cours du temps de l'allongement de la colonne combustible sous l'effet du gonflement longitudinal des pastilles 5. Le crayon de combustible nucléaire ainsi réalisé avec un joint solide poreux selon l'invention 3 peut alors être utilisé pour son application dans un réacteur nucléaire.

### Exemple 3 : mousse de carbone revêtue d'un alliage de W-Re 5%

Un tube, de diamètre intérieur de 6,4 mm et de diamètre extérieur 7,2 mm, en mousse de carbone composée d'alvéoles ouvertes de 40 µm de diamètre est placé dans un four de dépôt chimique en phase vapeur (en anglais Chemical Vapor Deposition, CVD).

Les ligaments constituant la mousse subissent un dépôt d'une épaisseur d'environ 7 µm d'un alliage W-Re à 5% à partir de la décomposition d'un mélange de composés halogénés du tungstène et du rhénium.

Ce tube de mousse est ensuite introduit dans la gaine 1 de diamètre intérieur de 7,2 mm, puis la colonne de pastilles de combustible 5 de diamètre de 6.4 mm est, à son tour, introduite dans le tube de mousse.

La gaine 1 peut alors être fermée à ses extrémités, par exemple par brasure. Même si non représenté, avant de réaliser l'étape définitive de fermeture, un ressort hélicoïdal de compression est logé dans la chambre ou vase d'expansion 6 avec son extrémité inférieure en appui contre l'empilement des pastilles 5 (éventuellement une cale inerte ou une entretoise non représentée) et son autre extrémité en appui contre le bouchon supérieur. Les fonctions principales de ce ressort sont le maintien de l'empilement de pastilles 5 selon l'axe longitudinal XX' et l'absorption au cours du temps de l'allongement de la colonne combustible sous l'effet du gonflement longitudinal des pastilles 5. Le crayon de combustible nucléaire ainsi réalisé avec un joint solide poreux selon l'invention 3 peut alors être utilisé pour son application dans un réacteur nucléaire.

D'autres améliorations peuvent être prévues sans pour autant sortir du cadre de l'invention. Ainsi, dans l'ensemble des exemples 1 à 3 ci-dessus, le joint solide poreux 3 a une épaisseur à la fabrication, c'est-à-dire une fois la gaine 1 fermée et le crayon prêt pour son application, égal au jeu de montage total dimensionné entre la gaine 1 et la colonne de pastilles 5 de combustible.

On peut bien entendu prévoir des jeux (voir références 2, 4 en figure 1) qui subsistent une fois le crayon de combustible prêt, à la condition que les procédés de fabrication et les propriétés, notamment de dilatation thermique différentielle, respectivement de la gaine 1 et du joint solide poreux 3 d'une part et du joint 3 et des pastilles de combustible 5 le permettent.

Ces jeux tels que montrés en référence 2, 4 de la figure 1 sont, a priori, remplis d'un gaz, préférentiellement de l'hélium pour les crayons. En effet, l'hélium peut être pressurisé à la fabrication, de manière à accroitre le facteur de dilution des gaz de fission relâchés sous irradiation et ainsi, améliorer les performances thermiques du joint, donc de l'élément combustible. Dans un tel cas, le gaz occupe alors naturellement les porosités ouvertes du joint 3 solide poreux selon l'invention et celles des pastilles de combustible nucléaire 5.

Mais, selon l'invention, et contrairement aux solutions selon l'état de l'art, et plus particulièrement à la solution selon le brevet US 4235673, les jeux au montage ne sont pas impératifs et ne sont donc pas des jeux fonctionnels prévus pour accommoder le gonflement volumique des pastilles de combustible sous irradiation.

Par ailleurs, le mandrin utilisé pour former le joint solide poreux comme dans les exemples décrits peut être en différents matériaux compatibles avec ceux du joint, tels que le graphite, le quartz.

De même, pour l'étape finale du procédé, avant fermeture de la gaine, il a été décrit dans les exemples 1 à 3, la mise en place d'un ressort hélicoïdal de compression. De manière plus générale, on peut lors de cette étape finale avant l'étape de fermeture proprement dite de la gaine, utiliser ce qui est couramment désigné par un «système d'internes » dans le domaine nucléaire, c'est-à-dire un assemblage de composants tels que ressort, entretoise, cale inerte... dont la fonction est d'assurer le positionnement axial de la colonne de pastilles au sein de la gaine, et, dans le cas de caloporteurs pressurisés, à prévenir le flambage de la gaine (effondrement de la gaine sur son vase d'expansion).

La figure 2 illustre le comportement en compression de joints d'interface selon l'invention à forte porosité ouverte et à base de tresses ou à base de feutres en matériau SiC.

Plus exactement, tel qu'illustré, il s'agit d'essais en compression cyclée, chaque cycle alternant une charge et une décharge, ce qui se traduit sur la figure 2 par des boucles de chargement dans le plan déformation-contrainte.

En abscisses, on a indiqué les valeurs du taux de compression (déformation en %) du joint selon son épaisseur.

En ordonnées, on a indiqué les valeurs de chargement mécanique (contrainte en MPa) transféré par le joint sous l'effet de son écrasement.

Ainsi, de fait, les contraintes indiquées correspondent au chargement mécanique radial σᵣ que subirait la gaine d'un crayon de combustible nucléaire sous l'effet du gonflement volumique des pastilles de combustible empilées les unes sur les autres, les contraintes étant directement transmises à la gaine par la compression du joint entre les pastilles et la gaine. Ce chargement radial donne lieu à un chargement circonférentiel σ_{θ} dimensionnant dont l'intensité correspond à celle du chargement radial majoré d'un facteur multiplicatif dont un bon ordre de grandeur est donné par le rapport du rayon moyen de la gaine r_{G} à son épaisseur e_{G}, qui vaut typiquement de 5 à 10 : σ_{θ} = (r_{G}/e_{G}) σᵣ.

La figure 2 illustre ainsi le fait qu'un joint d'interface selon l'invention est adapté pour fonctionner comme un amortisseur de contraintes : le chargement transmis ne devient significatif que pour un taux de compression suffisant au-delà duquel le chargement transmis croit de manière progressive avec le taux de compression, jusqu'à atteindre (sans cinétique brutale), la valeur seuil du chargement limite admissible. Ainsi, pour un chargement σᵣ considéré significatif à partir de 1 MPa, le taux de compression est de respectivement de l'ordre de 40% et 70% pour les joints de type tresse et feutre considérés en figure 2.

Dans une situation de fonctionnement sous irradiation en réacteur, la gaine d'un crayon de combustible ne peut admettre un chargement mécanique que dans la mesure où celui-ci reste en-deçà d'une limite garantissant l'absence de rupture de gaine. Ainsi, si l'on fixe, par exemple, la valeur seuil de chargement circonférentiel σ_{θ} admissible à 100 MPa (ce qui constitue une valeur raisonnable vis-à-vis des chargements usuellement admis), soit un chargement radial σᵣ de l'ordre de 10 MPa (pour un rapport r_{G}/e_{G} de l'ordre de 10), on constate sur la figure 2, que les joints de type tresse et feutre considérés admettent respectivement un taux de compression de l'ordre de 60% et 95%, en-deçà duquel le chargement mécanique transmis à la gaine reste admissible.

Il est à noter qu'après les essais réalisés selon la figure 2, on a pu constater que le joint d'interface selon l'invention à base de tresse et celui à base de feutre conservait son intégrité : il y ainsi préservation de la structure de tresse/feutre, sans formation de fragments qui seraient susceptibles de se relocaliser dans un jeu entre pastilles et gaine réouvert dans un crayon de combustible.

Afin d'assurer les meilleures performances économiques, un crayon de combustible doit être maintenu en réacteur le plus longtemps possible, et au niveau de densité de puissance le plus élevé possible Afin de satisfaire les objectifs de sûreté, ces performances sont généralement limitées par diverses contraintes d'exploitation. L'une des limitations les plus sévères est imposée par la nécessité de garantir, en toutes circonstances, l'intégrité mécanique de la gaine du crayon combustible. Ceci se traduit ainsi par la définition d'un chargement limite admissible de la gaine (contrainte et/ou déformation au-delà de laquelle l'intégrité de la gaine ne peut plus être garantie). Or, sous irradiation, les pastilles de combustible subissent un gonflement volumique continu qui conduit à une interaction mécanique pastilles/gaine (IMPG) susceptible finalement de conduire à un chargement rédhibitoire de la gaine. La durée d'exploitation d'un crayon de combustible est donc fortement liée au délai de l'occurrence d'une interaction excessive. Le joint d'interface selon l'invention tel que défini ci-dessus apporte une réponse satisfaisante car il permet une expansion ou un gonflement volumique des pastilles plus durable. A taux de gonflement volumique des pastilles fixé, la durabilité dépend de l'épaisseur initiale du joint et du taux de compression qu'il admet avant que son état de compression ne conduise à transmettre un chargement mécanique rédhibitoire à la gaine : l'épaisseur initiale de joint à mettre en oeuvre est d'autant plus faible que le taux de compression admissible est élevé.

La figure 2 illustre le fait que des taux de compression très élevés sont nécessaires pour atteindre la limite de compression des joints de type tresse ou feutre proposés, ce qui signifie qu'on peut atteindre des durées d'irradiation accrues moyennant la mise en oeuvre d'un joint d'épaisseur raisonnable. Typiquement, les inventeurs pensent que, pour un taux de compression admissible de 60%, un joint d'interface selon l'invention d'épaisseur doublée par rapport à celle des joints exclusivement sous forme de fluides selon l'état de l'art (hélium ou sodium, avec une épaisseur représentant classiquement de l'ordre de 4% du rayon des pastilles) permettrait d'accroître la durée d'irradiation conventionnelle de l'ordre de 20%, ce qui constituerait un gain substantiel en termes d'économie du combustible.

Par ailleurs, des essais de cisaillement sur une structure fibreuse selon l'invention, de hauteur de l'ordre de 1 cm, ont été réalisés en lui imposant des efforts correspondant à des déplacements cycliques de l'ordre de 100µm à des températures de l'ordre de 400°C. Pour ces allongements de 1 %, la structure fibreuse est restée parfaitement intègre. Aussi, les inventeurs pensent que, pour des hauteurs d'une colonne de pastilles de combustible usuellement rencontrées, typiquement de l'ordre de 165cm, des allongements de l'ordre de 10cm aux températures d'irradiation usuelles pour une structure fibreuse selon l'invention d'une épaisseur initiale submillimétrique et découplée à la fois mécaniquement de la colonne de pastilles et de la gaine doivent laisser cette dernière intègre et ce durablement.

### REFERENCES CITEES :

[1] S. Audisio, Dépôts chimiques à partir d'une phase gazeuse, Techniques de l'ingénieur, M1660, 1985.
[2] J. Banhart, Manufacture, characterisation and application of cellular metals and metal foams, Progress in Materials Science, Vol. 46, pp. 559-632, 2001.
[3] A. Berthet, B. Kaputsa, R. Traccucci, P. Combette, F. couvreur, D. Gouaillardou, J.C. Leroux, J. Royer & M. Trotabas, Pressurized Water Reactor Fuel Assembly, in The nuclear fuel of pressurized water reactors and fast reactors - Design and behaviour, (H. Bailly, D. Ménessier and C. Prunier, Editors), Lavoisier Publishing, Paris, pp. 271-436, 1999.
[4] L. Caramaro, Textiles à usages techniques, Techniques de l'ingénieur N2511, 2006.
[5] Y. Guérin, In-reactor behaviour of fuel materials, in The nuclear fuel of pressurized water reactors and fast reactors - Design and behaviour, (H. Bailly, D. Ménessier and C. Prunier, Editors), Lavoisier Publishing, Paris, pp. 77-158, 1999.
[6] L. Kocon et T. Piquero, Les aérogels et les structures alvéolaires : deux exemples de mousses de carbone, L'Actualité Chimique, n° 295-296, pp. 119-123, 2006.
[7] J.Y. Malo, N. Alpy, F. Bentivoglio, F. Bertrand, L. Cachon, G. Geffraye, D. Haubensack, A. Messié, F. Morin, Y. Péneliau, F. Pra, D. Plancq & P. Richard, Gas Cooled Fast Reactor 2400 MWTh, status on the conceptual design studies and preliminary safety analysis, Proceedings of the ICAPP'09 conference, (Tokyo, Japan, May 10-14, 2009).
[8] R.B. Matthews and R.J. Herbst, Nuclear Technology, Vol. 63, pp. 9-22, 1983.
[9] Hj. Matzke, Science of advanced LMFBR fuels, North Holland, Amsterdam, 1986.
[10] P. Millet, J.L. Ratier, A. Ravenet et J. Truffert, Fast Reactor Fuel Subassembly, in The nuclear fuel of pressurized water reactors and fast reactors - Design and behaviour, (H. Bailly, D. Ménessier and C. Prunier, Editors), Lavoisier Publishing, Paris, pp. 437-529, 1999.
[11] K. Tanaka, K. Maeda, K. Katsuyama, M. Inoue, T. Iwai and Y. Arai, Journal of Nuclear Materials, Vol. 327, pp. 77-87, 2004.
[12] Design and construction rules for fuel assemblies of PWR nuclear power plants, AFCEN, 2005.

## Revendications

1. Crayon de combustible nucléaire s'étendant selon une direction longitudinale (XX') comprenant une pluralité de pastilles (5) de combustible empilées les unes sur les autres sous la forme d'une colonne et une gaine (1), en matériau transparent aux neutrons, entourant la colonne de pastilles, dans lequel, en section transversale à la direction longitudinale (XX'), la gaine et les pastilles ont une section circulaire et dans lequel un joint d'interface, également de section circulaire en section transversale à la direction longitudinale (XX'), en matériau transparent aux neutrons, est inséré entre la gaine et la colonne de pastilles empilées sur au moins la hauteur de cette dernière, le joint d'interface étant une structure solide (3), découplée mécaniquement à la fois de la gaine (1) et de la colonne de pastilles (5), de conductivité thermique élevée et à porosité ouverte, cette structure solide ayant un coefficient de conduction thermique suffisamment élevé pour assurer le transfert thermique entre la colonne de pastilles et la gaine et étant adaptée pour se déformer par compression selon son épaisseur de sorte à subir un écrasement sous l'effet du gonflement volumique des pastilles sous irradiation, l'épaisseur initiale du joint et son taux de compression étant tels que le chargement mécanique transmis à la gaine par les pastilles sous irradiation reste inférieur à une valeur seuil prédéterminée.

2. Crayon de combustible nucléaire selon la revendication 1, dans lequel la porosité ouverte du joint d'interface a un volume au moins égal à 30% du volume total du joint d'interface issu de la fabrication.

3. Crayon de combustible nucléaire selon la revendication 2, dans lequel la porosité ouverte du joint d'interface a un volume compris entre 30% et 95% du volume total du joint d'interface issu de la fabrication.

4. Crayon de combustible nucléaire selon la revendication 3, dans lequel la porosité ouverte du joint d'interface a un volume compris entre 50% et 85% du volume total du joint d'interface issu de la fabrication.

5. Crayon de combustible nucléaire selon l'une des revendications précédentes, dans lequel le joint d'interface présente en section transversale à la direction (XX'), une épaisseur supérieure à au moins 4% du rayon des pastilles.

6. Crayon de combustible nucléaire selon l'une des revendications précédentes, dans lequel le joint d'interface est constitué d'une ou plusieurs structures fibreuses, telle(s) que tresse(s) et/ou feutre(s) et/ou nappe(s) et/ou tissu(s) et/ou tricot(s).

7. Crayon de combustible nucléaire selon la revendication 6 en combinaison avec la revendication 4, dans lequel le joint d'interface constitué de structure(s) fibreuse(s) a un pourcentage volumique de fibres compris entre 15 et 50%.

8. Crayon de combustible nucléaire selon la revendication 6, dans lequel le joint d'interface est constitué à partir d'une tresse comprenant une couche de fibres de carbone et d'une couche comprenant des fibres de carbure de silicium superposée sur la couche de fibres de carbone.

9. Crayon de combustible nucléaire selon l'une des revendications 1 à 5, dans lequel le joint d'interface est réalisé à partir d'un ou plusieurs matériaux alvéolaires, tel(s) qu'une mousse.

10. Crayon de combustible nucléaire selon l'une des revendications précédentes, dans lequel le joint d'interface est à base de céramique.

11. Crayon de combustible nucléaire selon l'une des revendications 1 à 9, dans lequel le joint d'interface est à base de métal.

12. Crayon de combustible nucléaire selon l'une quelconque des revendications 1 à 11, dans lequel le joint solide, à porosité ouverte, présente une hauteur supérieure à celle de la colonne de pastilles empilées, la différence de hauteur entre le joint solide et la colonne de pastilles empilées étant prévue pour garantir que cette dernière reste axialement en regard du joint durant toute la phase d'irradiation en fonctionnement du réacteur nucléaire auquel est destiné le crayon de combustible, phase d'irradiation au cours de laquelle la colonne de pastilles subit un allongement par gonflement sous irradiation.

13. Procédé de réalisation du crayon de combustible nucléaire selon la revendication 1, comprenant les étapes suivantes :
a/ réalisation au moins partielle du joint de section transversale circulaire, en ledit matériau transparent aux neutrons, sous la forme de la structure (3) de conductivité thermique élevée et à porosité ouverte, adapté pour se déformer par compression selon son épaisseur;
b/ insertion du joint au moins réalisé partiellement dans une gaine (1) cylindrique à section transversale circulaire et ouverte à au moins une de ses extrémités, en matériau transparent aux neutrons,
c/ introduction de la pluralité de pastilles de combustible nucléaire sur au plus la hauteur du joint dans ce dernier inséré dans la gaine cylindrique à section transversale circulaire,
d/ fermeture complète de la gaine une fois le joint réalisé totalement.

14. Procédé de réalisation selon la revendication 13, selon lequel l'étape a/ est réalisée selon les sous-étapes suivantes :
- superposition d'une couche de tresse comprenant des fibres de carbure de silicium sur une couche de tresse de fibres de carbone elle-même sur un mandrin,
- compression de la tresse bicouche dans un moule cylindrique,
- introduction d'un liant soluble dans la tresse comprimée,
- évaporation du solvant,
selon lequel l'étape b/ est réalisée à l'aide du mandrin autour duquel la tresse est en contact,
et selon lequel on réalise ultérieurement à l'étape c/ un traitement thermique sous dépression afin d'éliminer le liant et ainsi mettre en contact le joint avec la pluralité de pastilles empilées et avec la gaine.

15. Procédé de réalisation selon la revendication 14, selon lequel les couches de tresse sont de type bidimensionnelle avec un angle de tressage de 45° par rapport à l'axe du mandrin.

16. Procédé de réalisation selon la revendication 13, selon lequel l'étape a/ est réalisée selon les sous-étapes suivantes :
- aiguilletage de nappes de fibres de carbone sous la forme d'un tube sur un mandrin,
- réalisation d'un traitement thermique,
- compression du tube traité thermiquement dans un moule cylindrique,
- introduction d'un liant soluble dans le tube comprimé,
- évaporation du solvant,
selon lequel l'étape b/ est réalisée à l'aide du mandrin autour duquel le tube est en contact,
et selon lequel on réalise ultérieurement à l'étape c/ un traitement thermique sous dépression afin d'éliminer le liant et ainsi mettre en contact le joint avec la pluralité de pastilles empilées et avec la gaine.

17. Procédé de réalisation selon la revendication 13, selon lequel l'étape a/ est réalisée selon les sous-étapes suivantes :
- réalisation d'un tube en mousse de carbone composée d'alvéoles ouvertes,
- dépôt chimique en phase vapeur (CVD) d'un alliage en W-Re sur le tube en mousse de carbone.

## Patentansprüche

1. Kernbrennstab, der sich in einer Längsrichtung (XX') erstreckt und eine Vielzahl in Form einer Säule aufeinandergestapelter Brennstofftabletten (5) und ein Hüllrohr (1) aus einem neutronendurchlässigem Material umfasst, welches die Tabletten-Säule umgibt, bei dem, im Querschnitt zu der genannten Längsrichtung (XX'), das Hüllrohr und die Tabletten einen kreisförmigen Querschnitt aufweisen, und bei dem eine Übergangsfuge, ebenfalls mit kreisförmigem Querschnitt im Querschnitt zu der genannten Längsrichtung (XX'), aus neutronendurch-lässigem Material, eingefügt ist zwischen dem Hüllrohr und der Tablettensäule bis auf wenigs-tens die Höhe dieser Letzteren, und diese Übergangsfuge dabei eine feste Struktur (3) ist, die mechanisch sowohl von dem Hüllrohr (1) als auch von der Tablettensäule (5) entkoppelt ist und eine hohe Wärmeleitfähigkeit und eine offene Porosität aufweist, wobei diese feste Struktur einen ausreichend hohen Wärmeleitkoeffizienten hat, um den Wärmetransfer zwischen der Tablettensäule und dem Hüllrohr zu gewährleisten, und angepasst ist, um sich durch Druck entsprechend ihrer Dicke so zu verformen, dass sie unter der Wirkung der Volumenausdehnung der Tabletten unter Bestrahlung einer Quetschung bzw. Stauchung ausgesetzt ist, wobei die ursprüngliche Dicke der Übergangsfuge und ihr Verdichtungsverhältnis so sind, dass die durch die Tabletten auf das Hüllrohr unter Bestrahlung übertragene mechanische Belastung unter einem vorher festgelegten Wert bleibt.

2. Kernbrennstab nach Anspruch 1, bei dem die offene Porosität der Übergangsfuge bzw. des Übergangsfugenmaterials ein Volumen aufweist, das wenigstens gleich 30% des Gesamtvolumens des aus der Herstellung hervorgegangenen Übergangsfugenmaterials ausmacht.

3. Kernbrennstab nach Anspruch 2, bei dem die offene Porosität der Übergangsfuge bzw. des Übergangsfugenmaterials ein Volumen aufweist, das zwischen 30% und 95% des Gesamtvolumens des aus der Herstellung hervorgegangenen Übergangsfugenmaterials ausmacht.

4. Kernbrennstab nach Anspruch 3, bei dem die offene Porosität der Übergangsfuge bzw. des Übergangsfugenmaterials ein Volumen aufweist, das zwischen 50% und 85% des Gesamtvolumens des aus der Herstellung hervorgegangenen Übergangsfugenmaterials ausmacht.

5. Kernbrennstab nach einem der vorhergehenden Ansprüche, bei dem die Übergangsfuge in dem Querschnitt zu der Längsachse (XX') eine Dicke aufweist, die größer ist als wenigstens 4% des Durchmessers der Tabletten.

6. Kernbrennstab nach einem der vorhergehenden Ansprüche, bei dem die Übergangsfuge durch eine oder mehrere Faserstrukturen der Typen Flechtprodukte, Filzprodukte, Tuchprodukte, Gewebeprodukte, Strickprodukte gebildet wird.

7. Kernbrennstab nach Anspruch 6 in Kombination mit Anspruch 4, bei dem die durch eine Faserstruktur (Faserstrukturen) gebildete Übergangsfuge volumenbezogen einen Prozentsatz von 15 bis 50% Fasern aufweist.

8. Kernbrennstab nach Anspruch 6, bei dem die Übergangsfuge gebildet wird durch ein Flechtprodukt, das eine Kohlenstofffaserschicht und eine die Kohlenstofffaserschicht überlagernde Siliciumkarbidschicht umfasst.

9. Kernbrennstab nach einem der Ansprüche 1 bis 5, bei dem die Übergangsfuge auf einem oder mehreren Alveolarmaterialien basiert, zum Beispiel einem Schaum.

10. Kernbrennstab nach einem der vorhergehenden Ansprüche, bei dem die Übergangsfuge auf Keramik basiert.

11. Kernbrennstab nach einem der Ansprüche 1 bis 9, bei dem die Übergangsfuge auf Metall basiert.

12. Kernbrennstab nach einem der Ansprüche 1 bis 11, bei dem die feste Übergangsfuge, mit offener Porosität, eine größere Höhe aufweist als die Säule aus gestapelten Tabletten, wobei der Höhenunterschied zwischen der festen Übergangsfuge und der Tablettenstapel-Säule so vorgesehen ist, dass garantiert ist, dass diese Letztere der Fuge während der gesamten Strahlungsphase im Betrieb des Kernreaktors, für den der Brennstab bestimmt ist, axial gegenüberstehend bleibt, wobei die Tablettensäule im Laufe dieser Strahlungsphase durch Ausdehnung unter Strahlung eine Verlängerung erfährt.

13. Verfahren zur Herstellung der Kernbrennstäbe nach Anspruch 1, die folgenden Schritte umfassend :
a/ zumindest partielle Herstellung der Fuge mit kreisförmigem Querschnitt aus dem genannten neutronendurchlässigen Material in Form der Struktur (3) mit hoher Wärmeleitfähigkeit und offener Porosität, fähig sich unter Druck gemäß ihrer Dicke bzw. dickenmäßig zu verformen;
b/ Einsetzen der zumindest partiell hergestellten Fuge in eine zylindrische Hüllrohr (1) mit kreisförmigem Querschnitt, offen an mindestens einem ihrer Enden und aus neutronendurchlässigem Material;
c/ Einsetzen der Vielzahl von Brennstofftabletten bis höchstens auf die Höhe der Fuge in diese in das zylindrische Hüllrohr mit kreisförmigem Querschnitt eingesetzte Letztere,
d/ vollständiges Verschließen des Hüllrohrs, nachdem die Fuge komplett realisiert ist.

14. Herstellungsverfahren nach Anspruch 13, nach dem der Schritt a/ gemäß folgenden Teilschritten realisiert wird :
- Überlagern einer Flechtschicht, umfassend Siliciumkarbidfasern auf einer selbst auf einen Dorn aufgebrachten Kohlenstofffasern-Flechtschicht,
- Komprimieren bzw. Verdichten der zweilagigen Flechtschicht in einer zylindrischen Form,
- Einführen eines lösbaren Bindemittels in das verdichtete Flechtprodukt,
- Verdampfung des Bindemittels,
und nach dem der Schritt b/ mit Hilfe des Dorns realisiert wird, mit dessen Umfang das Flechtprodukt Kontakt hat,
und gemäß dem man nach dem Schritt c/ eine Wärmebehandlung bei Unterdruck durchführt, um das Bindemittel zu eliminieren und somit die Fuge mit der Vielzahl gestapelter Tabletten und mit dem Hüllrohr in Kontakt zu bringen.

15. Herstellungsverfahren nach Anspruch 14, gemäß dem die Flechtschichten vom zweidimensionalen Typ sind, mit einem Flechtwinkel von 45° in Bezug auf die Achse des Dorns.

16. Herstellungsverfahren nach Anspruch 13, bei dem der Schritt a/ gemäß den folgenden Teilschritten realisiert wird :
- Nadeln von rohrförmigen Karbonfaserlagen auf einem Dorn,
- Durchführen einer Wärmebehandlung,
- Komprimieren bzw. Verdichten des wärmebehandelten Rohrs in einer zylindrischen Form,
- Einführen eines lösbaren Bindemittels in das verdichtete Rohr,
- Verdampfen des Lösungsmittels,
bei dem der Schritt b/ mit Hilfe des Dorns realisiert wird, mit dem um ihn herum das Rohr Kontakt hat,
und bei dem man nach dem Schritt c/ eine Wärmebehandlung bei Unterdruck durchführt, um das Bindemittel zu eliminieren und so den Kontakt mit der Vielzahl von gestapelten Tabletten und mit dem Hüllrohr herzustellen.

17. Herstellungsverfahren nach Anspruch 13, bei dem der Schritt a/ gemäß den folgenden Teilschritten realisiert wird :
- Herstellung eines Rohrs aus Kohlenstoffschaum mit offenen Zellen bzw. Poren,
- chemische Gasphasenabscheidung (CVD) einer W-Re-Legierung auf dem Rohr aus Kohlenstoffschaum.

## Claims

1. Nuclear fuel rod extending along a longitudinal direction (XX'), comprising a plurality of fuel pellets (5), stacked on each other in the form of a column and a cladding (1) made of a material transparent to neutrons, surrounding the column of pellets, in which the cladding and the pellets have a circular cross-section transverse to the longitudinal direction (XX'), and in which an interface joint, also with a circular cross-section transverse to the longitudinal direction (XX'), made of a material transparent to neutrons, is inserted between the cladding and the column of stacked pellets, at least over the height of the column, the interface joint being a solid structure (3) mechanically decoupled from the cladding (1) and from the column of pellets (5), with a high thermal conductivity and open pores, this solid structure having a sufficiently high coefficient of thermal conductivity to transfer heat between the column of pellets and the cladding and being adapted to deform by compression across its thickness so as to be compressed under the effect of the three-dimensional swelling of the pellets under irradiation, the initial thickness of the joint and its compression ratio being such that the mechanical load transmitted to the cladding by the pellets under irradiation is less than a predetermined threshold value.

2. Nuclear fuel rod according to claim 1, in which the open pores of the interface joint have a volume equal to at least 30% of the total volume of the interface joint as produced in fabrication.

3. Nuclear fuel rod according to claim 2, in which the open pores of the interface joint have a volume between 30% and 95% of the total volume of the interface joint as produced in fabrication.

4. Nuclear fuel rod according to claim 3, in which the open pores of the interface joint have a volume between 50% and 85% of the total volume of the interface joint as produced in fabrication.

5. Nuclear fuel rod according to one of the previous claims, in which the thickness of the interface joint in its section transverse to the (XX') direction is more than at least 4% of the radius of the pellets.

6. Nuclear fuel rod according to one of the previous claims, in which the interface joint is composed of one or several fibrous structures such as braid(s) and/or felt(s) and/or web(s) and/or fabric(s) and/or knit(s).

7. Nuclear fuel rod according to claim 6 combined with claim 4, in which the interface joint composed of fibrous structure(s) has a volume percentage of fibres between 15 and 50%.

8. Nuclear fuel rod according to claim 6, in which the interface joint is made from a braid comprising a carbon fibre layer and a layer comprising silicon carbide fibres superposed on the carbon fibre layer.

9. Nuclear fuel rod according to any one of claims 1 to 5, in which the interface joint is made from one or several honeycomb materials such as foam.

10. Nuclear fuel rod according to one of the previous claims, in which the interface joint is based on ceramic.

11. Nuclear fuel rod according to one of claims 1 to 9, in which the interface joint is based on metal.

12. Nuclear control rod according to any one of claims 1 to 11, in which the solid joint with open pores, has a height greater than the height of the column of stacked pellets, the difference in height between the solid joint and the column of stacked pellets being selected to guarantee that the column of pellets remains facing the joint axially throughout the irradiation phase during operation of the nuclear reactor in which the fuel rod will be used, the column of pellets being submitted to an elongation by swelling under irradiation during the irradiation phase.

13. Method for making the nuclear fuel rod according to claim 1, comprising the following steps:
a/ at least partially make the joint with a circular cross-section made of the said material transparent to neutrons, in the form of the structure (3) with high thermal conductivity with open pores, capable of deforming under compression across its thickness;
b/ insert the at least partially produced joint into a cylindrical cladding (1) with a circular cross-section that is open at least at one of its ends, made of material transparent to neutrons;
c/ insert the plurality of nuclear fuel pellets over not more than the height of the joint, inside the joint inserted into the cylindrical cladding with circular cross-section;
d/ completely close the cladding once the joint has been entirely produced.

14. Production method according to claim 13, according to which step a/ is performed using the following sub-steps:
- superpose a braid layer comprising silicon carbide fibres on a carbon fibre braid layer itself on a mandrel;
- compress the two-layer braid in a cylindrical mould;
- add a soluble binder into the compressed braid;
- evaporate the solvent;
according to which step b/ is performed using the mandrel around which the braid is in contact;
and according to which later in step c/, a heat treatment is performed under a vacuum to eliminate the binder and thus bring the joint into contact with the plurality of stacked pellets and with the cladding.

15. Production method according to claim 14, according to which the braid layers are of the two-dimensional type with a braiding angle of 45° relative to the axis of the mandrel.

16. Production method according to claim 13, according to which step a/ is performed using the following sub-steps:
- needlebonding of carbon fibre webs in the form of a tube on a mandrel;
- performance of a heat treatment;
- compression of the heat-treated tube in a cylindrical mould;
- addition of a soluble binder into the compressed tube;
- evaporation of the solvent;
according to which step b/ is performed using the mandrel around which the tube is in contact,
and according to which later in step c/, a heat treatment is performed under a vacuum to eliminate the binder and thus bring the joint into contact with the plurality of stacked pellets and with the cladding.

17. Production method according to claim 13, according to which step a/ is performed using the following sub-steps:
- production of a carbon foam tube composed of open honeycombs;
- chemical vapour deposition (CVD) of a W-Re alloy on the carbon foam tube.
